# EUROPEAN PATENT APPLICATION

(11) **EP 4 434 733 A2**
(43) Date of publication of application: **25.09.2024**
(21) Application number: 24164774.2
(22) Date of filing: 20.03.2024
(51) Int. Cl.: B29C 70/24, B29C 70/38, B29B 11/16, B29C 70/22, B29C 70/44, B29C 70/20, B29K 105/08, D04C 3/00, B29L 23/00

(54) **PROCESS FOR MANUFACTURING A NON-CIRCULAR TUBULAR ELEMENT OF COMPOSITE MATERIAL, SPECIALLY INTENDED FOR CAMERA TRIPODS, AND NON-CIRCULAR TUBULAR ELEMENT OF COMPOSITE MATERIAL MANUFACTURED WITH SAID PROCESS**

(30) Priority: 22.03.2023 IT 202300005415
(71) Applicant: LAMIFLEX S.p.A., 24028 Ponte Nossa (Bergamo) (IT)
(72) Inventor: VISINI, Christian, 24028 Ponte Nossa (Bergamo) (IT); ASSOLARI, Dino, 24028 Ponte Nossa (Bergamo) (IT)
(74) Representative: Faggioni, Marco

(57) **Abstract**

Process for manufacturing a tubular element of composite material with non-circular cross-section including the following steps:
a) pre-production of a semi-finished product of reinforcing fibre braided sleeve (10);
b) insertion of said braided sleeve (10) onto a support mandrel (M) which outer cross-section corresponds to the inner non-circular cross-section of said tubular element;
c) resin-impregnation and polymerization of said braided sleeve (10) on the mandrel (M) in a mould which inner cross-section corresponds to the outer non-circular cross-section of said tubular element; and
d) extraction of the thus obtained tubular element with non-circular cross-section from said support mandrel (M);
and tubular element of composite material with non-circular cross-section obtained by said process.

## Description

### FIELD OF THE INVENTION

The present invention is referred to a process for manufacturing a tubular element of composite material having a non-circular cross-section, wherein the reinforcing fibre material preferably is carbon fibre. The invention further relates to a tubular element of composite material having a non-circular cross-section manufactured by said process. In particular, said tubular element is interestingly used in the manufacture of camera tripods and the like.

In the market of camera tripods, the use of tubular elements of composite material having a circular cross-section has been widespread for years, mainly due to their features of lightness and rigidity, which are in fact clearly superior to those found in traditional extruded tubular elements of aluminium alloys, but also due to their characteristic of not undergoing permanent yield deformations following over-stresses during use.

In the technological development of these tubular elements, special measures have been progressively adopted in the lamination step - i.e. in the step of preparing the superimposed layers of resin-impregnated reinforcing fibres - to guarantee that the desired requirements of axial and torsional rigidity as well as of good resistance to compression are simultaneously met, taking into account, on the one hand, the low thickness (about one millimetre) at which these tubular elements are typically manufactured and, on the other hand, the need to fix their two opposing ends with clamps or other fixing devices which give rise to high localized compressive stresses. The optimization and the efficiency of the manufacturing techniques progressively developed has led to an increasingly wider use of tubular elements made of composite materials to the detriment of the metallic ones, by tripod manufacturers.

### BACKGROUND OF THE PRIOR ART

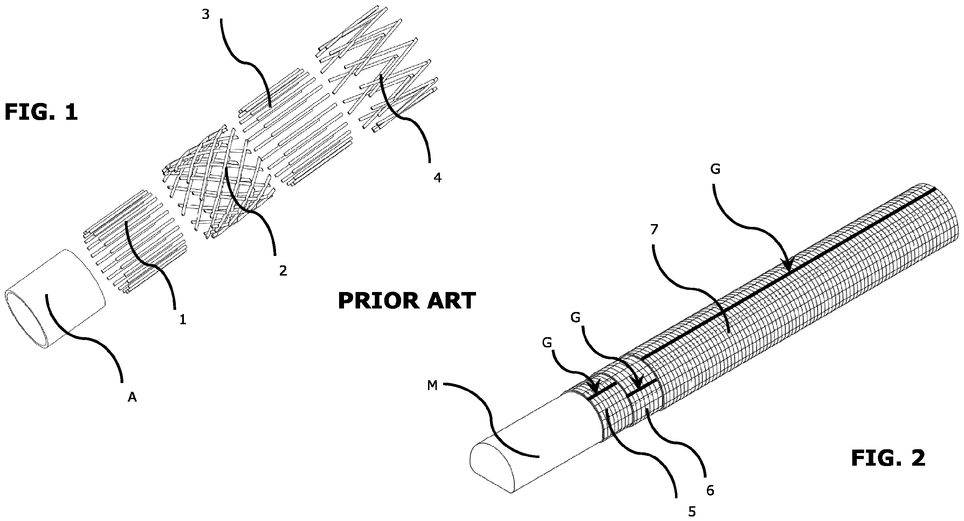

The main technologies currently in use for manufacturing these products are pultrusion, or more specifically pull-winding, and wrapping technologies. Pultrusion and pull-winding, in particular, allow for a continuous production with better repeatability of both dimensional and aesthetic requirements of the manufactured products. However, the products which can be obtained by these technologies can have only very simple cross-sections, provided with a central symmetry and without deep convexities and concavities - on which a correct deposition of reinforcing fibres during the rotation of a rotating mandrel A would be impossible - i.e., essentially circular (Fig. 1) or semicircular cross-sections, such as D-shaped cross-sections (Fig. 2).

Pull-winding technology normally provides for a carbon fibre lamination procedure according to a typical sequence of fibre layers laid in succession on a rotating mandrel A. As illustrated in Fig. 1, starting from the tubular element inner diameter, the following fibre layers are formed on mandrel A:
- an initial layer 1 of longitudinal, unidirectional fibres typically having a thickness of 0.30-0.35 mm;
- an intermediate double layer 2 of fibres wound in two opposite helical directions, with an angle of approximately +/- 30° with respect to the longitudinal axis, and indicative total thickness of 0.20-0.25 mm. The helical fibres of this intermediate double layer 2 fulfil the torsional and compression requirements in the radial direction of the tubular element;
- a second layer 3 of longitudinal, unidirectional fibres having a thickness of approximately 0.40 mm; and, lastly,
- a final double layer 4 of fibres wound in two opposite helical directions, with an angle of approximately +/-8-12° with respect to the longitudinal axis, in an open mesh. The helical fibres of the final double layer 4 also partially contribute to the torsional and compression requirements in the radial direction of the tubular element, and also respond to aesthetic requirements, i.e. they give rise to an outer finish with visible, open mesh, helical fibres.

Using thin fibres having said directions, with not too wide helix angles, ensures a good processability during the step of dragging the tubular element in formation, typical of pultrusion, and a smooth, even outer finish, free of undulations.

However, pull-winding technology involves several drawbacks which limit its field of application. Among them, not particularly high (typically 0.3-0.4 m/min) process speed, single-chain production plant, high criticality in maintaining and continuously monitoring the stringent aesthetic requirements with possibly high consequent reject, and, finally, long times for development and fine-tuning of tubular elements having a different cross-section or new lamination modes.

Furthermore, the pull-winding technology hardly allows to maintain thickness according to specifications (around 1 mm) for larger sizes and diameters (over 30-35 mm) with a relative efficiency decay, as far as regard the constancy along the circumference of the moment of inertia, compared to extruded aluminium or composite material tubular elements manufactured by wrapping technology.

Despite the drawbacks mentioned above, the pull-winding manufacturing technology currently remains the technique most widely used in uses involving cross-sections of smaller diameter and relatively simple geometries, mostly circular or semicircular, such as those shown for example in Figs. 2-4. US 2020/139644 discloses an application of the pull-winding technology on a mandrel to prepare a tubular braiding to be used in manufacturing composite structures for the aeronautical field. US 2010/160128 discloses another application of the pull-winding technology for braiding a layer of fibres on the surface of a supporting core having a D-section.

As an alternative to pull-winding technology, although to a significantly smaller extent, it was used the wrapping technology which provides for the manual or semi-automatic winding of several successive layers of fabric or unidirectional carbon fibre 5-7 (Fig. 2) on a metal mandrel A having a desired cross-section, said layers being normally pre-impregnated with an epoxy-based fluid matrix. The thus composed artifact is then subjected to a polymerization cycle in an autoclave or an oven and the finished tubular element is finally separated from the mandrel M, which can thus be reused in a subsequent wrapping manufacturing process.

The high manufacturing costs of an artefact manufactured by wrapping technology, as well as the high cost of the relative raw material (the fibre needs in fact a pre-treatment involving weaving and impregnation), hindered its use on a large scale for serial production, even in low-cost production countries where this technology was initially consolidated, also considering the fact that the outer surface still requires final finishing operations, such as sanding and painting, and that the unavoidable visibility of the longitudinal joint line G of the outermost layer strongly limits the use of this type of product in all applications where the aesthetic impact is significant.

Therefore, the wrapping technology remains of interest to this day mostly for preliminary activities on new projects or prototype studies of new geometric solutions.

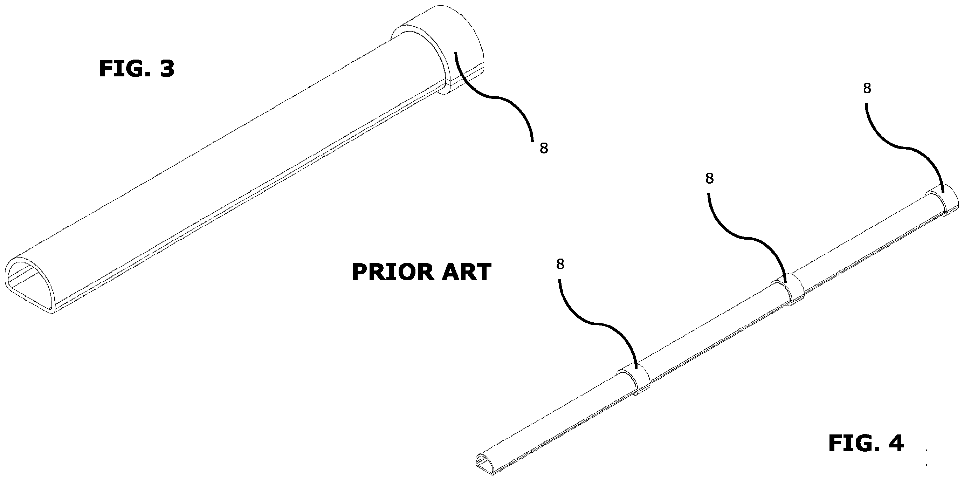

The continuous evolution of these tubular elements, combined with the manufacturing limitations highlighted above, is currently generating on the market a strong need for new structural solutions, both for tripods as a whole and for individual geometric sections of the tubes that make them up. As a matter of fact, parts having a constant cross-section are required, which are no longer circular or in any case symmetrically regular, but rather with a complex geometry, with possible concavities or convexities, undercut or sharp-edged parts connected to radiused parts. Some of these new tubular elements demanded by the market may also have large dimensions, over 35 mm in diameter, and in some cases also require the integration of thickened portions 8, thus no longer having a constant cross-section, so that the traditional locking components of the tubular elements assembled in a step subsequent to the manufacturing one can be eliminated from the tripod configuration, as illustrated for example in Figs. 3 and 4.

The pull-winding and the wrapping manufacturing technologies described above, which are currently of common use, therefore, no longer appear to be capable of fully satisfy the requirements of the most recently designed tubular elements. In particular, the pull-winding technology cannot be used for some particularly complex cross-sections, given that the fibre in the helical direction needs to be regularly and continuously wound on a moving rotating mandrel. Furthermore, even for the feasible cross-sections, this technology no longer appears to be completely convenient, or at least it entails a high risk of high percentages of reject due to product defects. Furthermore, since it is a continuous manufacturing technology, there still remains the unavoidable constraint that the tubular element must have a geometry with constant cross-section.

On the other hand, the base technology of pultrusion, i.e. a technology without the 'winder' equipment which carries out the continuous helical winding of the reinforcing fibres, could not guarantee, in the case of totally unidirectional fibres, the needed requirements of radial compressive strength and torsional rigidity. Hypotheses of alternative solutions through the additional use of carbon fibre tapes/fabric bands inserted inside or outside the bundles of unidirectional fibre also have a high risk of reject, due to the thin thickness of the product, both in the areas of possible shortage or overlapping of material, and for the high aesthetic standards expected in the sector which do not allow lack of evenness or other visible surface irregularities.

The object of the present invention is therefore to develop a process for manufacturing a non-circular tubular element of composite material according to a new concept, which process allows to overcome the typical drawbacks highlighted above of the known manufacturing processes, and can also be used for manufacturing tubular elements having a complex non-circular cross-section possibly including also edges, convexities, concavities or asymmetries, while maintaining high thickness evenness of the artifact over the entire cross-section, and excellent surface finish.

### SUMMARY OF THE INVENTION

This object is achieved by a process for manufacturing a non-circular tubular element of composite material having the features defined in claim 1 and by a non-circular tubular element of composite material having the features defined in claim 12. Other preferred features of such manufacturing process and such tubular element of composite material are defined in the respective secondary claims.

### BRIEF DESCRIPTION OF THE DRAWINGS

Further features and advantages of the process for manufacturing a tubular element of composite material according to the present invention will anyhow become more evident from the following detailed description of a preferred embodiment of the same, given by mere way of non-limiting example and illustrated in the accompanying drawings, wherein:
Fig. 1 (prior art) is a schematic perspective and exploded view of the typical layers of a tubular element manufactured by pull-winding technology;
Fig. 2 (prior art) is a schematic perspective view of a tubular element manufactured by wrapping technology;
Fig. 3 (prior art) is a perspective view of a tubular element having a terminal annular thickening;
Fig. 4 (prior art) is a perspective view of a tubular element having a terminal annular thickening and two intermediate annular thickenings;

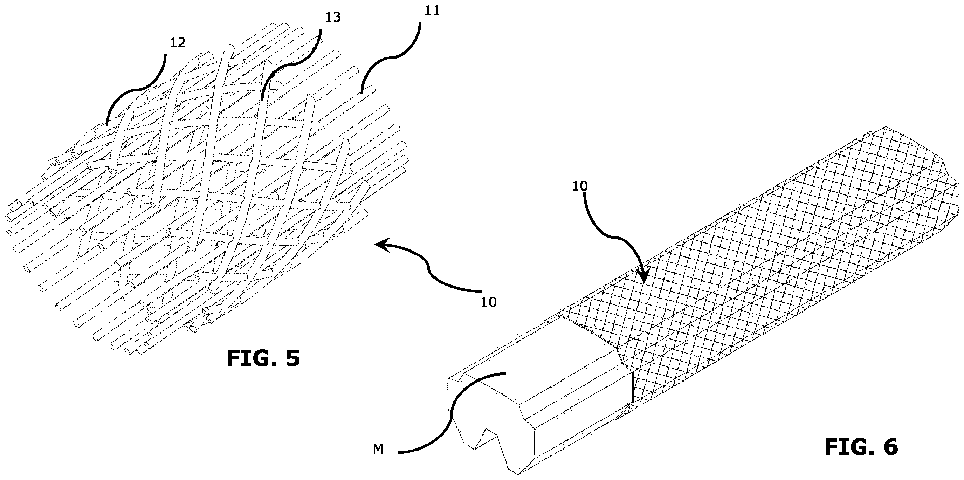

Fig. 5 is an enlarged schematic view of a portion of triaxial braided sleeve of reinforcing fibre;
Fig. 6 is a schematic perspective view of a first embodiment of the process for manufacturing a tubular element according to the present invention;
Fig. 7 is a schematic perspective view of a multi-cavity injection and polymerization mould used in the process for manufacturing a tubular element according to the present invention;
Fig. 8 is a schematic perspective view of a tubular element obtained by the manufacturing process illustrated in Figs. 6 and 7;
Fig. 9 is a schematic perspective view of a second embodiment of the process for manufacturing a tubular element according to the present invention; and
Fig. 10 is a schematic perspective view of a tubular element obtained by the manufacturing process illustrated in Fig. 9.

### DETAILED DESCRIPTION OF THE PREFERRED EMBODIMENTS

According to the present invention, a fully innovative process solution has been identified, to solve the problem highlighted above, which solution provides for a discontinuous construction method of the composite tubular element. According to this process, a single braided sleeve structure 10 of multi-directional carbon fibre is mainly used and, in particular, a triaxial braided sleeve comprising both fibres in the longitudinal direction and fibres in different oblique directions, previously obtained as a semi-finished product through a manufacturing technology on a braiding machine.

The braided sleeve 10 of triaxial carbon fibre comprises fibres 11 in the longitudinal direction and fibres 12 and 13 in two directions symmetrically angled to said longitudinal direction, for example +/- 45°. The diameter of the triaxial braided sleeve 10 is so determined that the braided sleeve side surface corresponds to the development of the tubular element specific cross-section being designed from time to time. Semi-finished braided sleeve products of this type are already known and available for several years on the market of composite material products, although for uses in completely different fields of application from the object of the present invention.

Although the manufacturing cost of these triaxial braided sleeve semi-finished products is higher than that of the basic fibres wound in coils used in the pull-winding technique, the triaxial braided sleeve is economically competitive for large quantities and has a relatively low impact on the overall cost of the product, considering the relatively small dimensions of the manufactured tubular elements and the use of a single braided sleeve to form, by a simple covering operation of a support mandrel M, the entire tubular element being manufactured.

The particular method of laminating tubular elements with non-circular cross-section according to the present invention allows to guarantee good axial rigidity and high compressive strength and torsional rigidity of the thus obtained artifact, as well as to maintain a constant thin thickness of the product along the entire cross-section - a thickness of 1 mm is a standard value in the sector, but the manufacturing process of the invention also allows lower thicknesses, for example of 0.8 mm, to be obtained - with cross dimensions of the artifacts in the range of 15-25 mm, for smaller cross-sections, and up to 40-50 mm for larger cross-sections.

The preferred manufacturing technology for the production of tubular elements with non-circular cross-section according to the present invention is the known resin transfer moulding (RTM) technology, wherein a consolidated preform of carbon fibre arranged on a support mandrel M is placed in a mould, which is closed and placed under vacuum, - and a suitable resin formulation - generally of a thermosetting type, typically an epoxy or polyurethane resin - is injected under pressure inside the mould using an injection machine which mixes the resin components and the catalyst immediately before the injection.

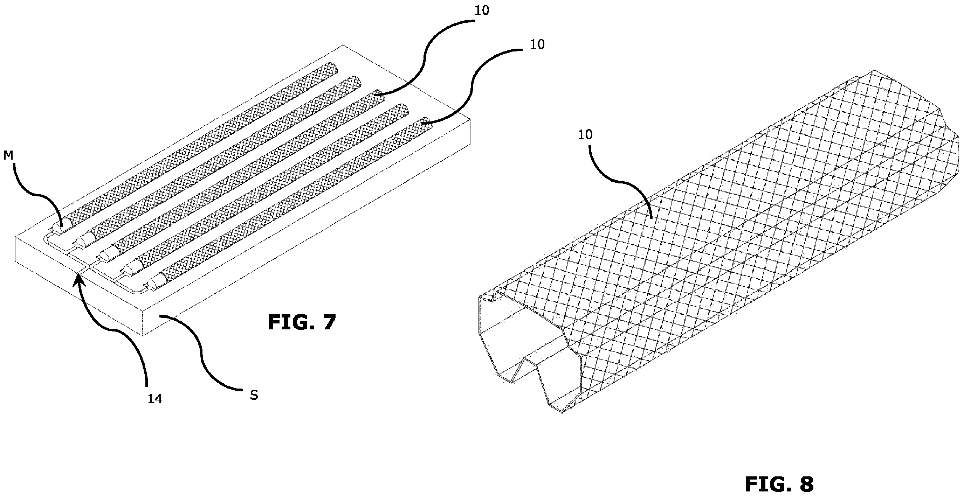

RTM technology, in fact, allows to overcome all the manufacturing limits of the current production technologies described above. In particular, the RTM technology allows the integration of a very rapid preliminary preparation step, wherein the operator simply performs a quick positioning of the triaxial braided sleeve 10 onto a metal mandrel A whose outer cross-section corresponds to the desired inner cross-section of the tubular element being manufactured - the mandrel A being suitably cleaned and pretreated with a release agent - with a subsequent injection moulding step under pressure of the thermosetting resin inside a mould whose inner cross-section corresponds to the desired final outer cross-section of the tubular element, inside which the mandrel A is positioned. Advantageously, the injection mould is a multiple mould S like that schematically illustrated in Fig. 7, wherein several cavities are provided arranged in parallel inside the mould, for housing multiple mandrels M, each covered by a respective braided sleeve 10. Preferably, the various aforesaid cavities are all connected to a single input channel 14 of the thermosetting resin.

The length of the multiple cavities of the mould S is preferably an integer multiple of the finished lengths of the tubular elements required by the market (for example from 300 to 600 mm), and can therefore have a development from 900 to 1500 mm, so as to allow the formation of raw rods of tubular element that are a multiple, from double to five times, of the finished length of the requested product, so as to minimize any processing reject.

During the insertion step of the braided sleeve 10 onto the mandrel M, the braided sleeve 10 is preferably fixed and held in the correct position onto the mandrel M by means of appropriate, typically spray-applied, liquid fixing agents which guarantee its good consolidation and accurate dimensional stability during the resin impregnation and polymerization process. For the benefit of production times, the step of coating the mandrels M with the braided sleeve 10 can be carried out simultaneously with the step of moulding a previous group of coated mandrels, simply by doubling the number of available mandrels M.

The RTM manufacturing technology generally is characterised by high production capacity, ease of automation, excellent repeatability of the features of the finished product, and also wide flexibility in case of any variation of the type of product (new cross-sections and new moulds can be easily implemented and made operational), or of the specific configuration of the composite laminate.

In a further embodiment, the outer aesthetic finish of the artifacts obtained with the process of the invention is easily modified (from a braided finish to a homogeneous finish), by adding a layer of carbon (or other materials, for example TNT) non-woven fabric externally wrapped onto the triaxial carbon fibre braided sleeve 10. This material must be easily draped over the specific section of the tubular element being processed, by selecting appropriate weights of the non-woven fabric, and a suitable binder. Since the non-woven fabric layer has the consistency of a veil, once it is resin-impregnated and polymerized in the mould the final joint line is not visible and this improves the aesthetic appearance of the product.

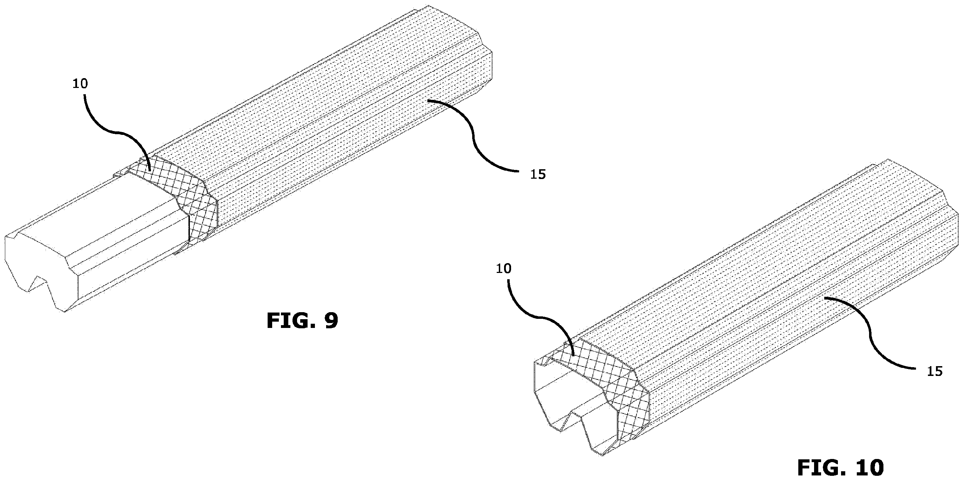

For applications where a higher axial rigidity of the tubular elements is required, another embodiment of the invention is particularly suitable, wherein a thin layer (for example 0.2-0.3 mm) of unidirectional carbon fibre tape 15 is inserted onto the mandrel M, in addition to the braided sleeve 10. The thin layer of unidirectional carbon fibre tape 15 can be arranged both inside and outside (Figs. 9 and 10) the braided sleeve 10, also as a semi-finished component pre-consolidated with a binder. The unidirectional semi-finished component can include a standard high-strength fibre, or even a partial or total presence of very high modulus pitch fibre, in the case of specific requests for particularly high axial rigidity of the tubular element. In this case the triaxial braided sleeve 10 can be brought to a minimum thickness, equal to approximately 0.8 mm, to have a total thickness of the tubular element not greater than 1-1.1 mm.

In another embodiment, the triaxial sleeve 10 consists of two distinct elements rather than a single element, namely, a first unidirectional element with longitudinal fibres and a second biaxial sleeve element with fibres arranged according to two symmetrical inclinations. These two elements can be distinct elements, and in this case they are placed in succession and in the desired order onto the mandrel M, or they can be already pre-formed by the braiding machine as two distinct but partially mutually interlaced elements, and in this case the insertion onto the mandrel M takes place in a single operation as in the previous embodiment. This structure of the triaxial sleeve made up of two distinct elements makes it possible to increase the proportion of unidirectional fibres compared to the angled fibres, and thus obtain higher axial rigidity of the tubular element.

For applications wherein the tubular element is not provided with concavities or undercut areas and has therefore a lower shape rigidity in the transverse direction, still a further embodiment of the invention is particularly preferred, wherein a thin layer (for example 0.2-0.3 mm) of helical fibres with an angle close to 90° with respect to the longitudinal axis is preliminarily wound onto the mandrel M by winding technology; subsequently, onto this first layer of helical fibres the braided sleeve 10 is inserted - as a single sleeve of the triaxial type or, alternatively, as a sleeve made up of two superimposed elements, the inner one being unidirectional with longitudinal fibres and the outer one being a biaxial sleeve - and then the mandrel is sent to the resin impregnation and moulding steps. The tubular elements according to this embodiment feature a very high transversal rigidity, even when formed with very low thicknesses (around 1 mm).

The manufacturing process according to the present invention also shows another significant advantage compared to the main technology currently in use, i.e. pull-winding technology, as it allows the production of artifacts that do not necessarily have constant cross-section. In the initial step of preparation of the mandrels M covered with the braided sleeve 10, thickened areas can be easily integrated, for example locking collars also made in advance with rings of braided sleeve 10 or strips of carbon fabric wrapped in predetermined limited areas of the mandrel M.

This need to integrate reinforced outer areas into the moulding process for fixing the tubular elements can, alternatively, be practiced by using pre-formed inserts - even in another material, for example a plastic material - which are then co-moulded together with the remainder of the preform. The process of the invention allows in fact the insertion of thickened areas placed at will in each element - for example three thickened areas evenly spaced as illustrated in Fig. 4 - without making the moulding and extraction procedure more complicated. Thanks to this option, the end user of the tubular elements needs no longer to subsequently assemble these external components to achieve the end locks.

The manufacturing process according to the invention may involve some drawbacks compared to continuous technologies such as pultrusion or pull-winding technologies, which drawbacks can however be easily overcome. Specifically, the configuration of the moulded tubular element can show at one or two points of its -cross-section (i.e., in correspondence with the joint lines of the base mould with the lid mould) two resin burrs which coincide with a longitudinal, resin feeding channel. The minimization of the thickness of this resin edge is provided in the process fine-tuning step, to reduce the extent of the burr and the need for its removal, as well as to eliminate the need for a subsequent painting step.

However, there is also the possibility of eliminating the longitudinal feeding channel, if the permeability of the braided sleeve 10 allows the resin an easy advancement flow through the same sleeve 10, from a front injection point to a final suction point located in the rear part of the mould S. A further way to improve the flow of the impregnation resin is to use adjustment pads of predefined thickness, which allow to provide different closing heights of the mould S.

However, if there is a high resistance to the advancement of the resin in the carbon fibre preform, there is the possibility of eliminating the longitudinal feeding channel by using a recently implemented (mainly for other sectors, for example automotive) high pressure RTM injection system, which is particularly suitable for obtaining high production capacities and quality standards.

The other relevant critical aspect, in relation to the manufacturing process of the invention, concerns some intermediate steps, such as the cleaning of the moulds S, and some additional steps after the operation of mould impregnation such as, for example, the steps of extraction and cleaning of the mandrels M. Both these additional steps can be managed in parallel in the process and/or be automated; to free these additional steps from the actual moulding process it is obviously possible to use a third additional group of mandrels M.

Further variations or improvements to the basic configuration illustrated above of the process for manufacturing tubular elements according to the invention can be made simply by changing the materials used, considering aspects of current and strong relevance such as environmental sustainability and the use of recycled materials. Possible examples are bio-resins or biocatalysts, i.e. compounds having limited portions of oil derivatives (such as bisphenol-A) and high content of biological materials, for example based on cashew nutshell liquid (such as Cashew Nutshell Liquid-CNSL from Cardolite Chemistry). Examples of potentially applicable recycled materials are carbon non-woven fabrics entirely made from recycled fibre (such as Non-Woven CarboNXT from Mitsubishi). The basic process of preform preparation and resin injection by RTM technology can maintain the previously described features also using these different materials, as long as a reinforcing structure mainly consisting of the carbon fibre triaxial braided sleeve 10 is maintained.

The versatility of the manufacturing process of the invention potentially allows to produce multiple raw tubes (from double to five times the length of use) even with shorter lengths than the maximum defined by the cavities provided in the mould S. This is to avoid rejects in case of different types of lengths of use. In fact, a shorter preform can be easily prepared on the mandrel M and a low-cost filler can be possibly used on the cavity portion which is left fibre-free, or a (plastic or metal) insert having a cross-section corresponding to that of the tubular element being processed can be used.

Related activities have the main aim of obtaining improvements in surface finish, reduction of void and porosity effects within the composite laminate, reduction of mould filling times.
the manufacturing technology illustrated above, when used in series production, allows for improved engineering of the process to optimize the cycle productivity and efficiency, but it is not completely exhaustive about the possible alternative variants to the adopted manufacturing solution.

For example, as an alternative to the metal mandrels M adopted in the preparation and lamination of the preform with the braided sleeve 10 and any other reinforcing materials, the use of pressurized air chambers inside the mould can be considered, to avoid the relevant extraction and cleaning steps of the mandrels M.

Specific construction details and possible measures, relating to the improvement of the resin injection and filling system, due to implementations of different mould configurations, do not imply any change to the concepts and premises of the above disclosed technological solution.

A further technology allowing a product evolution - alternative to the RTM process but still involving the use of a carbon triaxial braided sleeve 10 as the main reinforcing part - provides a thermoplastic matrix composite, wherein the semi-finished component of the braided sleeve 10 already has the polymeric matrix component in the form of twisted threads on the carbon fibre (co-mingling) or of polymer powder dispersed thereon (powdering). In this case the manufacturing technique is more closely associated with the already described application with inner air chamber during the moulding step, which moulding therefore occurs by compression and not by injection.

The features of performance and configurations of the product, with similar possible variations, are similar to the version already described in the case of a thermosetting matrix, even though with different construction techniques and polymer matrix.

In conclusion, the tubular element for camera tripods with a complex, non-circular cross-section, made in composite material mainly consisting of braided sleeve reinforcement of triaxial carbon fibres, preferably manufactured by resin injection technology under pressure into a closed mould under vacuum, compared to conventional techniques: provides weight minimization for various cross-sections and sizes; satisfactorily addresses the stresses from axial, torsional and radial compression loads, in terms of resistance and reduced strains; allows a high standard aesthetic finish that is also easily modifiable or customizable; and, finally, features economic competitiveness and production capacity, in line with the market expectations about the evolution of these products.

The main advantages of the process for manufacturing tubular elements of the invention for use as camera tripods are briefly exposed below:
- a configuration of tubular element with a complex, or in any case non-circular or semi-circular, cross-section, of composite material made with a single reinforcement of a braided sleeve in triaxial carbon fibre which guarantees fibre continuity in the longitudinal and transversal directions, and which allows rapid preparation of the artifact, avoiding the multi-layer laminations typical of pre-impregnated fabric use.
- the manufacturing of the product is preferably carried out by using RTM technology, which is more versatile than the currently most widespread pull-winding technique, due both to the fewer construction geometric constraints imposed on the finished product and to the ease of making new variants to the product configuration;
- the braided sleeve resin-impregnated by RTM technology also allows for minimum thicknesses (1 mm or even lower, e.g. 0.8 mm) both for standard dimensions (15-35 mm) and for larger dimensions (e.g. 35-50 mm), unlike pull-winding tubular elements where the thickness must be progressively increased for higher diameters. This allows to satisfy the weight optimization and lightness requirements demanded by the market for these new types of parts for innovative tripods;
- the tubular element obtained through a triaxial carbon braided sleeve can be easily manufactured even for irregular cross-sections provided with edges, convexities, concavities, asymmetries;
- unlike pull-winding technology, the tubular element manufactured by RTM technology is not limited to a constant cross-section on the outer perimeter, but localized thickenings can be provided, possibly repeated at a constant distance, to provide for direct integration in the moulding step of lateral locking collars, thus guaranteeing optimization and economic savings in the final assembly process by the user;
- the preliminary lamination is not limited, when needed, to the sole use of the triaxial braided sleeve, but, when there is a need of further stiffening in the axial direction the tubular element, it is possible to add tapes of unidirectional fibre both inside and outside the braided sleeve, or, in the case of tubular elements without concavities or undercut areas, a thin layer of helical fibre with an angle close to 90° with respect to the longitudinal axis, in order to significantly increase the tubular element rigidity in the transverse direction, or, finally, also an outer layer of carbon (or other material, for example aramid material) non-woven fabric, to obtain a homogeneous aesthetic of technological quality, but also a good resistance to abrasion and cracking, minimizing fragility in the event of impacts;
- besides being a single triaxial element, the braided sleeve can also be pre-formed as two distinct elements, respectively unidirectional with longitudinal fibres and biaxial with fibres at two symmetrical inclinations, as mutually interlaced or separate elements. In this way it is possible to increase the proportion of unidirectional fibres compared to inclined fibres, thus obtaining a higher axial rigidity of the tubular element;
- the use of layers of carbon non-woven fabric can also facilitate the resin flow during the RTM impregnation step, allowing the longitudinal resin feeding channel to be minimized or eliminated, thus improving aesthetics, and possibly avoiding the subsequent steps of burr removal and painting;
- it is possible to use new eco-sustainable materials such as non-woven fabrics entirely obtained from recycled carbon fibre or new bio-resins (including epoxy-based) applicable to RTM technology, in completely similar manners to those described above for conventional materials;
- the RTM technology proposed for the formation of the tubular elements of the invention allows for a high serialization, when high production capacities are required, and always offers a high repeatability of the product obtained, both in general and with respect to the relevant features and performances;
- furthermore, other technologies can be implemented, alternative to the RTM technology, such as air chamber and compression moulding using a thermoplastic resin matrix instead of thermosetting resin, without modifying the concept of preparation of the composite laminate preform, which always mainly involves a triaxial, braided, carbon fibre sleeve as a continuous reinforcing element in the various directions.

It is understood that the invention should not be considered as limited to the specific arrangements illustrated above, which are only exemplary embodiments thereof, but that different variants are possible, all within the reach of a person skilled in the art, without thereby departing from the scope of protection of the invention itself, which is only defined by the following claims.

## Claims

1. Process for manufacturing a tubular element of composite material with non-circular cross-section **characterized in that** it includes the following steps:
a) pre-production of a semi-finished product of reinforcing fibre braided sleeve (10);
b) insertion of said braided sleeve (10) onto a support mandrel (M) which outer cross-section corresponds to the inner non-circular cross-section of said tubular element;
c) resin-impregnation and polymerization of said braided sleeve (10) on the mandrel (M) in a mould which inner cross-section corresponds to the outer non-circular cross-section of said tubular element; and
d) extraction of the thus obtained tubular element with non-circular cross-section from said support mandrel (M) .

2. Process for manufacturing a tubular element of composite material with non-circular cross-section as in claim 1, wherein said braided sleeve is a triaxial braided sleeve comprising fibres (11) in the longitudinal direction and fibres (12, 13) in two directions symmetrically angled to said longitudinal direction.

3. Process for manufacturing a tubular element of composite material with non-circular cross-section as in claim 1, wherein said braided sleeve is a combination of a first unidirectional element comprising fibres (11) in the longitudinal direction and a second biaxial braided sleeve element comprising fibres (12, 13) in two directions symmetrically angled to said longitudinal direction, said first and second elements being mutually independent or partially interlaced.

4. Process for manufacturing a tubular element of composite material with non-circular cross-section as in claim 2 or 3, wherein said reinforcing fibre is carbon fibre and said resin is a thermosetting resin.

5. Process for manufacturing a tubular element of composite material with non-circular cross-section as in claim 1, wherein in said step b), i.e., insertion of the braided sleeve (10) onto a support mandrel (M), said braided sleeve (10) is fixed and held in place on the mandrel (M) by spray-applied liquid fixing agents.

6. Process for manufacturing a tubular element of composite material with non-circular cross-section as in claim 1, wherein before said step c), I.e., resin-impregnation, the mould is closed and placed under vacuum.

7. Process for manufacturing a tubular element of composite material with non-circular cross-section as in claim 6, wherein the resin-impregnation step occurs under pressure.

8. Process for manufacturing a tubular element of composite material with non-circular cross-section as in claim 4, wherein before or after said step b), i.e., insertion of the braided sleeve (10) onto a support mandrel (M), a tape (15) of unidirectional carbon fibre is applied to the mandrel (M) or the braided sleeve (10), respectively.

9. Process for manufacturing a tubular element of composite material with non-circular cross-section as in claim 4, wherein before said step b), i.e., insertion of the braided sleeve (10) onto a support mandrel (M), a thin layer of helical carbon fibre is applied onto the mandrel (M), by winding technology.

10. Process for manufacturing a tubular element of composite material with non-circular cross-section as in claim 4, wherein before said step c), i.e., resin-impregnation, a non-woven fabric finishing layer is applied to the braided sleeve (10).

11. Process for manufacturing a tubular element of composite material with non-circular cross-section as in any one of the preceding claims, wherein said non-circular cross-section includes edges, convexities, concavities, and/or asymmetries.

12. Tubular element of composite material with non-circular cross-section, **characterized in that** it comprises a continuous braided sleeve (10) of resin-impregnated reinforcing fibre.

13. Tubular element of composite material with non-circular cross-section as in claim 11, wherein said braided sleeve (10) is a triaxial braided sleeve comprising fibres (11) in the longitudinal direction and fibres (12, 13) in two directions symmetrically angled to said longitudinal direction.

14. Tubular element of composite material with non-circular cross-section as in claim 11, wherein said braided sleeve (10) is a combination of a first unidirectional element comprising fibres (11) in the longitudinal direction and a second biaxal element in the form of a braided sleeve comprising fibres (12, 13) in two directions symmetrically angled to said longitudinal direction.

15. Tubular element of composite material with non-circular cross-section as in claim 12 or 13, wherein said reinforcing fibre is carbon fibre and said resin is a thermosetting resin.

16. Tubular element of composite material with non-circular cross-section as in claim 12 or 13, further comprising a layer consisting of a tape (15) of unidirectional carbon fibre.

17. Tubular element of composite material with non-circular cross-section as in claim 12 or 13, further comprising a first layer consisting of helical carbon fibre.

18. Tubular element of composite material with non-circular cross-section as in claim 12 or 13, further comprising an outer finishing layer made of non-woven fabric.
